# EUROPÄISCHE PATENTSCHRIFT

(11) **EP 1 813 510 B1**
(45) Veröffentlichungstag und Bekanntmachung des Hinweises auf die Patenterteilung: **26.08.2009**
(21) Anmeldenummer: 06025177.4
(22) Anmeldetag: 06.12.2006
(51) Int. Cl.: B62D 6/00, B60T 8/24

(54) **Lenkverfahren zur Vermeidung eines Umkippens eines Fahrzeugs**
Steering method to avoid a vehicle roll-over
Procédé intervenant sur la direction pour éviter le renversement d'un véhicule

(30) Priorität: 27.01.2006 DE 102006004020
(43) Veröffentlichungstag der Anmeldung: 01.08.2007
(73) Patentinhaber: AUDI AG, 85045 Ingolstadt (DE)
(72) Erfinder: Riedel, Helmut, 86697 Oberhausen (DE); Stefan, Joachim, 85122 Hofstetten (DE); Theinert, Bernd, 92339 Beilngries (DE)
(74) Vertreter: Thielmann, Frank

(56) Entgegenhaltungen:
- DE-A1- 10 235 026
- DE-A1- 10 315 965
- JP-A- 2007 145 294

## Beschreibung

Die Erfindung betrifft ein Verfahren zur Vermeidung eines Umkippens eines Fahrzeugs, bei dem sich das Fahrzeug zumindest teilweise in unerwünschter Weise auf einem Untergrund abseits einer für das Bewegen des Fahrzeugs vorgesehenen Fahrbahn befindet, wobei zumindest eine das Umkippen des Fahrzeugs beschreibende Größe ermittelt wird, und abhängig von dieser Größe ein fahrerunabhängiger Eingriff in das Lenkverhalten des Fahrzeugs durchgeführt wird.

Bei Geländefahrzeugen mit hochliegendem Schwerpunkt kann es häufiger zu Unfällen kommen, bei denen das Fahrzeug umkippt. Ursache ist dabei beispielsweise eine Bordsteinberührung, ein einseitiges Eingraben des Fahrzeugs in einen weichen Seitenstreifen oder auch ein Abkommen von der Fahrbahn auf eine geneigte Fahrbahnböschung, insbesondere einem Abhang.

Insbesondere beim Fahren auf derartig geneigtem Untergrund, wie einer Fahrbahnböschung, neigt der Fahrer des Fahrzeugs instinktiv dazu, dass Fahrzeug durch ein Gegenlenken wieder auf die Fahrbahn zurückzubringen. Diese Lenkbewegung ist dann in üblicher Weise der Auslöser für einen Roll-over-Unfall bzw. ein Umkippen des Fahrzeugs, da mit der Lenkbewegung ein Kippmoment erzeugt wird. Gleiches gilt bereits dann, wenn sich beim Abkommen auf einen weichen Seitenstreifen die Räder einer Fahrzeugseite in den Seitenstreifen eingraben.

Bekannte Systeme zur Roll-over-Sensierung sehen vor, bei drohendem Rollover die Rückhaltesysteme geeigneterweise situationsangepasst zu aktivieren. Dabei kann vorgesehen sein, über eine Lenkhilfe oder einen Lenkeingriff die instinktive, falsche Fahrerreaktion zu unterbinden und eine Stabilisierung des Fahrzeugs durchzuführen.

Beispielsweise ist aus der DE 103 15 965 A1 ein Verfahren und eine Vorrichtung zur Umkippvermeidung eines Kraftfahrzeugs bekannt, bei dem ein derartiger Lenkungseingriff durchgeführt wird. Es wird dort zunächst eine die Kippgefahr des Fahrzeugs beschreibende Größe ermittelt und abhängig von dieser Größe wenigstens ein fahrerunabhäniger Lenkeingriff durchgeführt. Der Lenkeingriff wird darüber hinaus abhängig von Informationen des Fahrzeugumfelds durchgeführt, welche durch eine entsprechende Sensorik erfasst werden können. Das vorgeschlagene Verfahren und die Vorrichtung berücksichtigen jedoch nur Situationen, bei denen sich das Fahrzeug auf ebenem Gelände neben der Fahrbahn bewegt und dort einen weichen Untergrund befährt. Der Lenkeingriff erfolgt derart, dass das Fahrzeug in den weichen Untergrund bewusst hineingelegt wird.

Es wird hier somit lediglich ein derartiger Fall einer Umkippmöglichkeit beschrieben, welche im üblichen Straßenverkehr relativ selten auftritt und bei dem selbst beim Abkommen von der Fahrbahn auf ein derartig ebenes Gelände nur in relativ seltenen Fällen ein Umkippen des Fahrzeugs auftreten kann.

Darüber hinaus ist aus der DE 102 35 026 A1 in allgemeiner Weise ein Verfahren zum Bestimmen eines an einem Lenkrad wirkenden Lenkmoments bei einem Fahrzeug angegeben. Bei dem bekannten Verfahren wird aus gemessenen Größen eine Kippneigung des Fahrzeugs ermittelt und das am Lenkrad wirkende Lenkmoment in Abhängigkeit der Kippneigung und des Fahrzustandes bestimmt. Lenkbetätigungen, die eine Zunahme einer Roll-over-Gefahr bewirken, werden erschwert, solche, die eine Abnahme einer Roll-over-Gefahr bewirken, werden erleichtert.

Aus dem Dokument EP 1 632 400 A1 ist bekannt, dass mittels einer Kamera die Umgebung seitlich der Fahrbahn detektiert werden kann und gegenüber der Fahrbahn geneigte Untergründe detektiert werden können. Abhängig von der Fahrzeuggeschwindigkeit und einem Winkel zwischen der Fortbewegungsrichtung des Fahrzeugs und einer Fahrbahnbegrenzung wird dann die Wahrscheinlichkeit eines Roll-Over-Unfalls bestimmt.

Aufgabe der Erfindung ist es, ein Verfahren zur Vermeidung eines Umkippens eines Fahrzeugs zu verbessern.

Diese Aufgabe wir durch ein Verfahren, welches die Merkmale nach Patentanspruch 1 aufweist, gelöst.

Bei einem erfindungsgemäßen Verfahren zur Vermeidung eines Umkippens eines Fahrzeugs bewegt sich das Fahrzeug zumindest teilweise in unerwünschter Weise auf einem Untergrund abseits einer für das Bewegen des Fahrzeugs normalerweise vorgesehenen Fahrbahn. Es wird eine das Umkippen des Fahrzeugs beschreibende Größe ermittelt und abhängig von dieser Größe ein fahrerunabhängiger Eingriff in das Lenkverhalten des Fahrzeugs durchgeführt. Unter einem fahrerunabhängigen Eingriff wird verstanden, dass das Lenkverhalten durch ein elektronisches System, welches unabhängig vom Fahrer ist, beeinflusst werden kann. Dieser fahrerunabhängige Eingriff kann jedoch auch derart erfolgen, dass vom Fahrer durchgeführte Lenkbewegungen auch berücksichtigt werden. Das elektronische System wertet somit auch Informationen der vom Fahrer durchgeführten Lenkbewegungen und/oder Bremsbewegungen aus und berücksichtigt diese für den elektronischen Eingriff in das Fahrverhalten des Fahrzeugs, insbesondere des Lenk- und/oder Bremsverhaltens. Ein wesentlicher Gedanke der Erfindung besteht darin, dass das Fahrzeug auf einem Untergrund bewegt wird, welcher gegenüber der für das eigentliche Bewegen des Fahrzeugs vorgesehenen Fahrbahn geneigt ist und der fahrerunabhägige Eingriff in das Lenkrad derart erfolgt, dass einer Kippneigung des Fahrzeugs bei weiterer Fahrt auf dem geneigten Untergrund entgegen gewirkt wird. Der fahrerunabhängige Eingriff erfolgt derart, dass der Kippneigung entgegengewirkt wird, indem die lenkbaren Räder des Fahrzeugs zumindest schrittweise in Neigungsrichtung des Untergrunds eingestellt werden.

Ein Umkippen des Fahrzeugs kann somit in Situationen verhindert werden, in denen das Fahrzeug auf einem Untergrund bewegt wird, welcher gegenüber der normalen Fahrbahn relativ stark ansteigt oder relativ stark abfällt. Insbesondere dann, wenn sich das Fahrzeug auf einer abschüssigen Böschungsfahrt seitlich der eigentlichen Fahrbahn bewegt, kann dadurch die Wahrscheinlichkeit eines Umkippens des Fahrzeugs zumindest vermindert werden. Insbesondere dann, wenn das Fahrzeug von der Fahrbahn abkommt und auf einem abfallenden Untergrund in unerwünschter Weise bewegt wird, kann dadurch einem instinktiven, falschen Fahrerverhalten entgegengewirkt werden. Bei derartigen Gefahrensituationen, in denen das Fahrzeug einen relativ steilen Abhang oder eine relativ steile Böschung unerwünschterweise hinunterfährt, würde ein Fahrer in instinktiver Weise versuchen, eine Lenkbewegung durchzuführen, welche die Räder wieder in Richtung der eigentlich zu befahrenden Fahrbahn stellen soll, um wieder auf diese Fahrbahn gelangen zu können. Gerade bei abschüssigem Untergrund führt dies jedoch dazu, dass das Umkippen des Fahrzeugs sogar provoziert und herbeigeführt werden würde. Durch das vorgeschlagene Verfahren kann ein derartiger Rol-I-over-Unfall verhindert oder zumindest abgemildert werden.

Es erfolgt der fahrerunabhängige Eingriff derart, dass ein im Wesentlichen geradliniges Befahren in Neigungsrichtung des Untergrunds durchgeführt wird.

In vorteilhafter Weise umfasst der fahrerunabhängige Eingriff in das Lenkverhalten des Fahrzeugs ein aktives Lenken des Fahrzeugs.

Es kann auch vorgesehen sein, dass ein fahrerunabhäniger Eingriff in eine Bremsanlage des Fahrzeugs, insbesondere abhängig von der Kippneigung des Fahrzeugs durchgeführt wird. Neben einem Lenkeingriff kann somit auch eine Bremswirkung quasi automatisch erzeugt werden, welche die Wahrscheinlichkeit eines Umkippens des Fahrzeugs zumindest vermindert.

In bevorzugter Weise werden Informationen des Fahrzeugumfeldes mittels einer Umfeldsensorik erfasst und für die Ermittlung einer Kippneigung, insbesondere für den fahrerunabhängigen Eingriff, berücksichtigt. In vorteilhafter Weise wird dabei der Oberflächenverlauf des Untergrunds, insbesondere die Neigung des Untergrunds, in der Umgebung des Fahrzeugs erfasst. Es kann somit frühzeitig und vorausschauend die benachbarte Umgebung des befahrenen Untergrunds betrachtet werden und der fahrerunabhängige Eingriff unter Berücksichtigung dieser Informationen durchgeführt werden. Die Lenkeingriffe können dann derart erfolgen, dass das Fahrzeug in Richtung geringster Neigung des Untergrunds oder in Richtung mit geringsten Unebenheiten des Untergrunds gelenkt wird.

In vorteilhafter Weise wird der Oberflächenverlauf des Untergrunds insbesondere in einem Winkelsegment vor dem Fahrzeug und/oder in Bewegungsrichtung des Fahrzeugs und/oder in Neigungsrichtung des Untergrunds erfasst. Somit kann ein relativ großes Umfeld um das Fahrzeug herum betrachtet und im Hinblick auf eine Vermeidung eines Umkippens des Fahrzeugs ausgewertet werden. Die fahrerunabhängigen Lenkeingriffe können dann unter Berücksichtigung dieser Informationen durchgeführt werden. Die vorausschauende Sensorik kann somit in relativ exakter und auch schneller die Vielzahl an detektierten Informationen im Hinblick auf ein sicheres Bewegen des Fahrzeugs in dem Untergrund und zur Vermeidung des Umkippens des Fahrzeugs zielgerecht verarbeiten und auswerten.

In einer vorteilhaften Ausgestaltung werden auch Bewegungsabläufe des Fahrers, insbesondere Lenkbewegungen des Fahrers, mittels einer Innenraumsensorik erfasst und für den fahrerunabhängigen Eingriff auf das Lenkverhalten des Fahrzeugs berücksichtigt. Die Bewegungsabläufe des Fahrers werden bevorzugt mit einer optischen Innenraumsensorik, insbesondere mit einer Kamera, erfasst. Die in derartigen Situationen praktisch immer durchgeführten, teilweise auch falschen Bewegungsabläufe des Fahrers werden dadurch auch sehr schnell erfasst und es kann unmittelbar auf diese falschen Bewegungen reagiert werden, wodurch die Wahrscheinlichkeit eines Umkippens des Fahrzeugs reduziert werden kann.

In bevorzugter Weise erfolgt der fahrerunabhänige Eingriff derart, dass Lenkbewegungen des Fahrers in Richtung zunehmender Kippneigung des Fahrzeugs erschwert werden und/oder Lenkbewegungen des Fahrers in Richtung abnehmender Kippneigung des Fahrzeugs erleichtert werden. Das Anlegen von Lenkmomenten stellt eine zuverlässige Alternative zum aktiven Lenkeingriff dar.

In vorteilhafter Weise erfolgt der fahrerunabhängige Eingriff derart, dass sich das Fahrzeug im Wesentlichen in Richtung geringerer Neigung des Untergrunds bewegt. Das Fahrzeug kann dadurch quasi automatisch und selbstständig in eine gegebenenfalls vorhandene "Auslaufzone" gelenkt werden und gegebenenfalls sicher bis zum Stillstand gebracht werden ohne das ein Umkippen des Fahrzeugs erfolgt.

Der Untergrund kann im Sinne eines Abhangs ausgebildet sein und gegenüber der Fahrbahn abschüssig geneigt sein. Der Neigungswinkel des Untergrunds kann dabei beispielsweise zwischen 5° und 50°, und insbesondere zwischen 5° und 45°, und insbesondere zwischen 5° und 35° sein. Gerade diese Neigungen umfassen Abhänge, bei denen der Fahrer relativ steil eine Böschung hinunterfährt und dadurch aufgrund emotionaler Einflüsse instinktiv zu falschen Fahrerreaktionen neigt.

Ein Ausführungsbeispiel der Erfindung wird nachfolgend anhand einer schematischen Zeichnung näher erläutert. Die einzige Figur zeigt ein Ablaufdiagramm eines Verfahrens zur Vermeidung eines Umkippens eines Fahrzeugs.

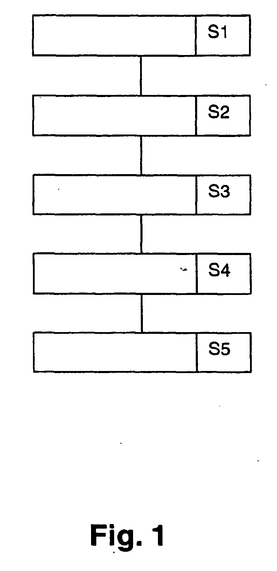

Ein Kraftfahrzeug, welches ein elektronisches System mit Steuereinheiten, Auswerteeinheiten und Sensoren zum Durchführen eines Verfahrens zur Vermeidung eines Umkippens eines Fahrzeugs aufweist, wird auf einer für das Bewegen des Fahrzeugs vorgesehenen Fahrbahn, beispielsweise auf einer Bundesstraße oder einer Autobahn, bewegt. Gemäß einem Schritt S1 in Fig. 1 verlässt das Fahrzeug in unerwünschter Weise diese Fahrbahn und befährt des Weiteren eine an die Fahrbahn angrenzende Böschung, wobei die Böschung einen an die Fahrbahn angrenzenden Untergrund darstellt, welcher in abschüssiger Neigung gegenüber der Fahrbahnebene ausgebildet ist. Das Fahrzeug bewegt sich somit in unerwünschter Weise seitlich von der Fahrbahn einen Abhang hinunter.

Gemäß einem Schritt S2 wird dieses unerwünschte Bewegen des Fahrzeugs auf einem nicht üblichen Untergrund erkannt. Beispielsweise kann das Fahrzeug eine Sensorik aufweisen, welche derartige Bewegungszustände des Fahrzeugs erkennt und eine Gefahrensituation detektiert. Die Sensorik kann dabei als optisches System mit einer Bilderfassung und/oder als Radarsystem ausgebildet sein. Ebenfalls kann eine Ultraschallsensorik vorgesehen sein.

Wird eine derartige Gefahrensituation erkannt und somit auch die Gefahr eines Umkippens des Fahrzeugs erkannt, wird gemäß einem Schritt S3 zumindest eine das Umkippen des Fahrzeugs beschreibende Größe ermittelt. Hierzu weist das Fahrzeug ebenfalls eine Inertialsensorik auf, welche eine oder mehrere Sensoreinrichtungen aufweisen kann. Zur Bestimmung einer das Umkippen des Fahrzeugs beschreibenden Größe können beispielsweise in Fahrdynamikregelungssysteme enthaltene Sensoren ausgewertet werden. Beispielsweise können hier ein Gierratensensor, Raddrehzahlsensoren, Lenkwinkelsensoren, Drucksensoren im Bremskreis, Wankratensensoren, Querbeschleunigungssensoren und/oder Vertikalbeschleunigungssensoren genannt werden. Darüber hinaus können auch Schwimmwinkelsensoren sowie Radkraftinformationen und GPS-Signale ausgewertet werden. Prinzipiell können zur Bestimmung einer oder mehrerer das Umkippen des Fahrzeugs beschreibende Größe bzw. Größen alle Sensoren betrachtet werden, deren Ausgangssignale zur Beschreibung des Bewegungszustands des Fahrzeugs dienen. So können auch Sensoren einer aktiven Lenkung, wie Rückstellmomentsensoren oder Sensoren eines aktiven Fahrwerks, wie Einfedersensoren, berücksichtigt werden.

Eine oder mehrere dieser Signale der vorab genannten Sensoren können dann durch eine öder mehrere Steuereinheiten erfasst und ausgewertet werden. Die Auswertung erfolgt dabei gemäß einem Schritt S4 im Hinblick auf eine mögliche Kippneigung des Fahrzeugs im momentanen Bewegungszustand.

Die Kippneigung kann insbesondere als ein Wahrscheinlichkeitswert, mit einem Definitionsbereich zwischen beispielsweise 0 und 1, bestimmt werden.

Im Ausführungsbeispiel weist das Kraftfahrzeug auch eine bilderfassende Sensorik auf, welche das vor dem Fahrzeug und das seitlich zum Fahrzeug liegende Umfeld umfasst. Dadurch kann der Oberflächenverlauf des Untergrunds sowie charakteristische Kennzeichen dieses von dem Fahrzeug unerwünschterweise befahrenen Abhangs ermittelt werden. Im Ausführungsbeispiel kann dabei die vorangehende und seitlich zum Fahrzeug ausgebildete Neigung des Untergrunds und die Oberflächenbeschaffenheit festgestellt werden. Diesbezüglich kann erkannt werden, in welchem Bereich des Untergrunds die stärkste Neigungsrichtung auftritt. Des Weiteren kann festgestellt werden, inwieweit der unmittelbar benachbarte Untergrund Unebenheiten aufweist.

Darüber hinaus umfasst das Fahrzeug auch eine die Bewegung des Fahrers erfassende Sensorik. Dabei kann vorgesehen sein, dass sowohl die Bewegungen des Fahrers selbst als auch die durch den Fahrer verursachten Lenkbewegungen am Lenkrad des Fahrzeugs erfasst werden. Alle diese Informationen werden durch eine oder mehrere Steuereinheiten im Hinblick auf ein Umkippen des Fahrzeugs ausgewertet.

Gemäß einem Schritt S5 wird im Ausführungsbeispiel ein aktiver Lenkeingriff in das Lenkverhalten des Fahrzeugs durch das System im Fahrzeug durchgeführt. Dabei werden im Ausführungsbeispiel automatische und somit fahrerunabhängige Lenkbewegungen erzeugt, mit denen das weitere Fortbewegen des Fahrzeugs auf diesem abschüssigen Untergrund derart erfolgen soll, dass die Wahrscheinlichkeit eines Umkippens vermindert oder vollständig verhindert wird (Schritt S5).

Des Weiteren wird im Ausführungsbeispiel die Bremsanlage des Fahrzeugs automatisch derart betätigt, dass die Kippneigung des Fahrzeugs zumindest reduziert werden kann. Es werden somit sowohl Eingriffe in das Lenkverhalten als auch in die Bremsanlage fahrerunabhängig durchgeführt.

Diese Eingriffe können solange durchgeführt werden, bis ein vorgebbarer Risikoschwellwert einer Kippneigung unterschritten ist und somit das weitere Fortbewegen des Fahrzeugs in dem abschüssigen Untergrund mit minimierten Risiko möglich ist. Im Ausführungsbeispiel werden die Lenkeingriffe derart durchgeführt, dass das Fahrzeug den abschüssigen Untergrund im Wesentlichen geradlinig hinunterfährt. Bevorzugt kann dadurch erreicht werden, dass die lenkbaren Räder des Fahrzeugs zumindest schrittweise in Neigungsrichtung des Untergrunds eingestellt werden. Dadurch befährt das Fahrzeug den abschüssigen Untergrund im Wesentlichen in Neigungsrichtung des Untergrunds, wodurch die Kippwahrscheinlichkeit zumindest deutlich reduziert werden kann.

Die im Fahrzeuginnenraum angeordnete Sensorik zur Erfassung der Bewegungen des Fahrers gewährleistet ein frühzeitiges Erkennen der Bewegungen des Fahrers und somit ein schnelles Eingreifen und Gegenwirken von instinktiven falschen Lenkbewegungen des Fahrers. Es kann somit quasi gleichzeitig auf die falschen Lenkbewegungen des Fahrers reagiert werden und somit eine aus den falschen Lenkbewegungen des Fahrers resultierende Erhöhung der Gefahrensituation verhindert oder reduziert werden. Gerade durch diese vorausschauende Sensorik kann somit eine falsche Handlungsweise des Fahrers sehr effektiv unterbunden werden.

Die zu erwartende Fahrstrecke im abschüssigen Untergrund kann durch wenigstens eine Einrichtung aus optischen Erfassungseinrichtungen, wie einer Kamera, welche sowohl im sichtbaren als auch im nicht sichtbaren Bereich des Lichts arbeiten kann, und Navigationssysteme ermittelt werden. Gerade bei sehr abschüssigen und unebenen Untergründen kann dadurch ein vorausschauender Eingriff in das weitere Fahrverhalten des Fahrzeugs gewährleistet werden.

## Patentansprüche

1. Verfahren zur Vermeidung eines Umkippens eines Fahrzeugs, wobei, wenn sich das Fahrzeug zumindest teilweise in unerwünschter Weise auf einem Untergrund abseits einer für das Bewegen des Fahrzeugs vorgesehenen Fahrbahn bewegt, zumindest eine das Umkippen des Fahrzeugs beschreibende Größe ermittelt wird, und abhängig von dieser Größe ein fahrerunabhängiger Eingriff in das Lenkverhalten des Fahrzeugs durchgeführt wird, und **dadurch** einer Kippneigung des Fahrzeugs bei weiterer Fahrt entgegengewirkt wird,
**dadurch gekennzeichnet, dass**
falls der Untergrund gegenüber der Fahrbahn geneigt ist, der Eingriff in das Lenkverhalten derart erfolgt, dass einer Kippneigung des Fahrzeugs bei weiterer Fahrt auf dem geneigten Untergrund entgegengewirkt wird, indem die lenkbaren Räder des Fahrzeugs zumindest schrittweise in Neigungsrichtung des Untergrunds eingestellt werden, und ein im Wesentlichen geradliniges Befahren in Neigungsrichtung des Untergrunds durchgeführt wird .

2. Verfahren nach Anspruch 1,
**dadurch gekennzeichnet, dass**
zusätzlich ein Eingriff in eine Bremsanlage des Fahrzeugs, insbesondere abhängig von der Kippneigung des Fahrzeugs, durchgeführt wird.

3. Verfahren nach Anspruch 1 oder 2,
**dadurch gekennzeichnet, dass**
Informationen des Fahrzeugumfeldes mittels einer Umfeldsensorik erfasst werden und für die Ermittlung einer Kippneigung berücksichtigt werden, insbesondere für den Eingriff in das Lenkverhalten.

4. Verfahren nach Anspruch 3,
**dadurch gekennzeichnet, dass**
der Oberflächenverlauf des Untergrunds, insbesondere die Neigung des Untergrunds in der Umgebung des Fahrzeugs, erfasst wird.

5. Verfahren nach Anspruch 4,
**dadurch gekennzeichnet, dass** der Oberflächenverlauf des Untergrunds vor dem Fahrzeug und/oder in Bewegungsrichtung des Fahrzeugs und/oder in Neigungsrichtung des Untergrunds erfasst wird.

6. Verfahren nach einem der vorhergehenden Ansprüche,
**dadurch gekennzeichnet, dass**
Bewegungsabläufe des Fahrers, insbesondere Lenkbewegungen des Fahrers, mittels einer Innenraumsensorik des Fahrzeugs erfasst werden und für den Eingriff in das Lenkverhalten berücksichtigt werden.

7. Verfahren nach Anspruch 6,
**dadurch gekennzeichnet, dass**
die Bewegungsabläufe des Fahrers mit einer optischen Sensorik, insbesondere mit einer Kamera, erfasst werden.

## Claims

1. Method for avoiding roll-over of a vehicle, wherein, if the vehicle moves in undesirable manner at least partially over a substrate beyond a road provided for the movement of the vehicle, at least one variable defining roll-over of the vehicle is determined and, depending on this variable, a driver-independent intervention in the steering behaviour of the vehicle is carried out and a tilt tendency of the vehicle is thereby counteracted during further travel, **characterised in that** if the substrate is inclined relative to the road, the intervention in the steering behaviour takes place in such a manner that a tilt tendency of the vehicle during further travel on the inclined substrate is counteracted **in that** the steerable wheels of the vehicle are adjusted at least step-wise in the inclination direction of the substrate, and travel in a substantially straight line in the inclination direction of the substrate is carried out.

2. Method according to claim 1, **characterised in that** additionally an intervention in a braking system of the vehicle, in particular depending on the tilt tendency of the vehicle, is carried out.

3. Method according to claim 1 or 2, **characterised in that** information concerning the vehicle environment is detected by means of an environmental sensor system and is taken into account when determining a tilt tendency, in particular for the intervention in the steering behaviour.

4. Method according to claim 3, **characterised in that** the surface shape of the substrate, in particular the inclination of the substrate in the vicinity of the vehicle is detected.

5. Method according to claim 4, **characterised in that** the surface shape of the substrate in front of the vehicle and/or in the movement direction of the vehicle and/or in the inclination direction of the substrate is detected.

6. Method according to one of the preceding claims, **characterised in that** movement sequences performed by the driver, in particular steering movements by the driver, are detected by an interior sensor system of the vehicle and are taken into account for the intervention in the steering behaviour.

7. Method according to claim 6, **characterised in that** the movement sequences performed by the driver are detected with an optical sensor system, in particular with a camera.

## Revendications

1. Procédé pour éviter le renversement d'un véhicule, dans lequel, lorsque le véhicule se déplace au moins en partie de manière indésirable sur un sol à l'écart d'une voie de roulement prévue pour le déplacement du véhicule, au moins une grandeur décrivant le renversement du véhicule est déterminée, et une intervention indépendante du conducteur sur la direction du véhicule est effectuée en fonction de cette grandeur, et une inclinaison du véhicule est ainsi contrecarrée lors de la poursuite du trajet,
**caractérisé en ce que**
si le sol est incliné par rapport à la voie de roulement, l'intervention sur la direction se fait de telle manière qu'une inclinaison du véhicule est contrecarrée lors de la poursuite du trajet sur le sol incliné, par réglage au moins progressif des roues dirigeables du véhicule dans la direction d'inclinaison du sol et réalisation d'une circulation essentiellement rectiligne dans la direction d'inclinaison du sol.

2. Procédé selon la revendication 1,
**caractérisé en ce que**
une intervention sur un système de freinage du véhicule, dépendant en particulier de l'inclinaison du véhicule, est réalisée en sus.

3. Procédé selon la revendication 1 ou 2,
**caractérisé en ce que**
des informations de l'environnement du véhicule sont saisies au moyen d'un système de capteurs de l'environnement et prises en compte pour la détermination d'une inclinaison, en particulier pour l'intervention sur la direction.

4. Procédé selon la revendication 3,
**caractérisé en ce que**
l'allure de la surface du sol, en particulier l'inclinaison du sol dans l'environnement du véhicule, est saisie.

5. Procédé selon la revendication 4,
**caractérisé en ce que** l'allure de la surface du sol devant le véhicule et/ou dans le sens de déplacement du véhicule et/ou dans la direction d'inclinaison du sol est saisie.

6. Procédé selon l'une quelconque des revendications précédentes,
**caractérisé en ce que**
les séquences de mouvements du conducteur, en particulier les mouvements au volant du conducteur, sont saisies à l'aide d'un système de capteurs dans l'habitacle du véhicule et prises en compte pour l'intervention sur la direction.

7. Procédé selon la revendication 6,
**caractérisé en ce que**
les séquences de mouvements du conducteur sont saisies avec un système de capteurs optiques, en particulier avec une caméra.
